# EUROPEAN PATENT APPLICATION

(11) **EP 4 382 184 A1**
(43) Date of publication of application: **12.06.2024**
(21) Application number: 22211595.8
(22) Date of filing: 06.12.2022
(51) Int. Cl.: B01D 19/02, C05B 1/00

(54) **SYSTEM FOR BREAKING A LIQUID FOAM AND METHOD OF OPERATING THEREOF**

(71) Applicant: Yara International ASA, 0277 Oslo (NO)
(72) Inventor: GEPPERT, Tim, 3739 Skien (NO)
(74) Representative: De Clercq & Partners

(57) **Abstract**

Disclosed herein is a foam breaker unit for breaking a liquid foam into a liquid phase and a gas phase comprising a vessel comprising shear stress elements for separating the liquid phase and the gas phase of the liquid foam characterized in that the longitudinal axis of the vessel is declined with respect to the horizontal plane at an angle α ranging between - 90.0° and 0.0°.

## Description

### Field

The present disclosure relates to the field of liquid foam and of handling thereof.

### Background

Liquid foaming is an issue in several production processes, including phosphoric acid and NPK fertilizers production. Foaming results in the occupation of an extra volume of the liquid in the process, resulting in turn in a capacity loss of the production process. Various raw materials, including phosphate rocks, cannot be processed due to their foaming behaviour.

The handling of foaming materials is therefore challenging, and those materials can be handled only with great difficulty and with several drawbacks. In particular, they require the addition of antifoaming agents which dampens but do not eliminate foam generation. This necessary use of anti-foaming agents causes issues downstream in the process, in particular in the dry or granulation part of the production process where the physical properties of the granules are then affected.

### Prior art

EP0035705B1 (Bayer AG, 1982) discloses a foam breaker containing a rotating suction tube for the foam and at least 3 channels which branch outwards radially from the suction tube at an angle a of 30 to 60°.

CN113769442A (Yunnan Oihua Technology Co Itd) discloses a vacuum defoaming device comprising an air exhaust port at the top of an extraction barrel comprising foam, an air inlet of a high-pressure fan through a vacuum air exhaust pipe, and an air outlet of the high-pressure fan in fluid communication with an air-direction ventilating pipeline at the top of a wet-process phosphoric acid extraction device in which foam forms.

In US4545788A (Rhone Poulenc Chimie de Base SA, 1985), a slurry is discharged from an attack tank and degassed. At the top of the tank there is an overflow for discharging a first slurry portion. A container communicates with a pump. A receptacle is disposed between the overflow discharge and the container and comprises a downwardly inclined connecting surface for conducting the first slurry portion to the container. A conduit leads from the bottom of the tank and opens into the receptacle to combine a second slurry portion with the first slurry portion.

In US4391784A (Richard N. Hill, Sr. Charles D. B. Hill, 1983), foam generated during the digestion of phosphate rock is removed from the slurry either by overflow, mechanical sweeps, or by vacuum from strategically located nozzles connected to vacuum lines. The foam, after liquefaction, is returned to the filter where it results in improved filtration and return of soluble P2O5. Hence, the foam is removed but not broken to separate a liquid and a gas, and then liquefied.

In US2698219A (Compagnie de Saint Gobain SA, 1954), a pool containing the products of a reaction is established and another mass comprising at least one reactant of the reaction is also established. The pool and the mass are interconnected in the lower levels of the pool of the reaction products and the mass is forced into the pool through interconnection under relatively high hydrostatic pressure.

In US4363786A (White Springs Agricultural Chemicals Inc, 1982), it is disclosed a vessel with an agitator positioned within a draft tube, a shaft for said agitator mounted axially of said vessel and extending into said draft tube, an inlet conduit to said vessel for introducing a feed slurry (e.g. phosphate rock and strong acid) into said vessel, said inlet conduit preferably having a lower end portion terminating within said draft tube and wherein, said draft tube has an outwardly flared lower skirt portion terminating in the bottom portion of said vessel.

In CN108455543A (Sichuan Mianzhu Panlong Mineral Co. Ltd, 2018), phosphate ore pulp is added in extraction tank, sulfuric acid is added from the lower part of extraction tank in phosphate ore pulp again and the sulfuric acid is added to from feeding device under liquid in extraction tank. Using this method, foam is greatly reduced and the adverse effect in the extraction process is eliminated.

In CN107096261A (AN Yu-run, Yuxi,Yunnan, 2017), discloses a defoaming device including a sour ore deposit reaction unit, a circulating pump, a circulation pipe and a sprinkler. The sprinkler is arranged at the top of the liquid level in a sour ore deposit reaction unit and positioned at the sour ore deposit reaction zone. One end of the circulation pipe is connected the sprinkler, and the other end is connected with the slurry zone in the sour ore deposit reaction unit. The circulating pump is arranged such as to ensure circulation in the circulation pipe. Slurry or light phosphoric acid is circulated in the circulation pump to the slurry zone in the sour ore deposit reaction unit and sprayed at the liquid level of the sour ore deposit reaction zone using the sprinkler.

In CN105329866A (Anhui Liuguo Chemical Industry Co. Ltd, 2017), a Prayon multi-lattice reacting tank serves as the device for the extracting reaction. The method for the extracting reaction comprises the step of continuously spraying process water into a first reacting chamber of the reacting tank in a spray mode, the spray pressure of the process water being set at 0.04 mPa-0.08 mPa, and the spray amount of the process water being 4%-6% of the added pulp amount in the reacting tank. CN111892032A (Yunnan Phosphor Chemical Group Co. Ltd, 2020) relates to the technical field of wet-process phosphoric acid production. In the conventional production, sulfuric acid which is respectively added into a reaction tank 2 and a reaction tank 3 chamber. In CN111892032A, the sulfuric acid which is mostly adjusted and added into a pipeline at the outlet of a reaction slurry circulating pump, and the sulfuric acid is quickly diluted by the slurry to release a large amount of heat. Therefore, the heat removed by gasification is released by the reaction of phosphate rock under the original process condition and is changed into reaction heat release and sulfuric acid dilution heat. Hence, the heat to be removed is greatly increased, the gasification degree in unit time is enhanced, the foam volume in the circulating slurry under the vacuum condition required by the process is doubled and increased compared with that before modification. Consequently, the foam wall becomes thinner, the stability is poor and the foam is continuously broken, and a large amount of foam is eliminated in a flash cooler. In CN205241243U (Anhui Liuguo Chemical Industry Co. Ltd, 2016) relates to phosphoric acid by wet process extraction. The utility model includes a tubulose ring nozzle. The ring nozzle is fixed and surrounds the setting of a refeed line feed opening. The ring nozzle bottom is equipped with a plurality of holes that spray and every diameter that sprays the hole is at 3mm-5mm. A water pump is in being used for passing through pipe-line transportation to ring nozzle with the fresh water (FW). The spraying system can effectively restrain the interior foam of reaction and no or less chemical defoaming agent needs to be added which reduces the production costs.

CN104226024A (Anhui Liuguo Chemical Industry Co. Ltd, 2014) discloses a defoaming device for a phosphoric acid concentration process. The device comprises a sealing tank body, wherein an air inlet is formed in the side wall of the upper part of the tank body. The symmetrical center of the air inlet is arranged in the tangential direction of the tank body and a liquid drainage opening is formed in the side wall of the lower part of the tank body. An exhaust pipe is arranged in the tank body, the outlet of the exhaust pipe is arranged in the bottom of the tank body and the inlet of the exhaust pipe is arranged in the middle of the tank body and is positioned above the air inlet. A sealing partition board for separating the inner cavity of the tank body is arranged below the liquid drainage opening in the tank body and is downwards and obliquely arranged towards one side of the liquid drainage opening. According to the device disclosed by the invention, air and foam are thoroughly separated, the hydraulic resistance is small, the structure is simple and the device is easy to clean.

The goal of the present disclosure is to provide an alternative for breaking a foam comprising a liquid and a gas. Further, a goal of the current disclosure is to provide a system with increased flexibility in the handling of the raw material, such as the phosphate rock dissolved in acid in the production of phosphoric acid. The flexibility is herein defined as the capacity of the system to handle raw material generating additional foaming, such as phosphate rock with an increased total organic carbon content.

### Summary

In one aspect of the disclosure, a foam breaker unit for breaking a liquid foam into a liquid phase and a gas phase is disclosed. The foam breaker comprises:
- a vessel comprising shear stress elements for separating the liquid phase and the gas phase of the liquid foam;
- a vessel inlet for receiving the liquid foam from a reactor; and
- one or more vessel outlets for removing the liquid phase and the gas phase from the vessel.

The unit is characterized in that the longitudinal axis of the vessel is declined with respect to the horizontal plane at an angle α ranging between - 90.0° and 0.0°, more preferably ranging between - 60.0° to 0.0°.

The inventors have found that by positioning the vessel of the foam breaker unit declined with respect to the horizontal plane at an angle ranging from 0.0° to above - 90.0°, more preferably ranging between - 60.0° to 0.0°, the separated gas phase and liquid phase are allowed to flow through the vessel of the foam breaker unit at different velocities, which induces a vortex and which reduces the back-formation of liquid foam through mixing of gas in the gas phase and liquid in the liquid phase. Further, the residence time in vessel of the foam breaker unit and allowed for the separation of the liquid phase and the gas phase of the foam, is increased. Hence, the system of the disclosure provides improved breaking of a foam comprising a liquid and a gas and, hence, increased flexibility in the handling of raw materials.

In one embodiment according to the foam breaker unit of the disclosure, the unit further comprises a gas collector in fluid communication with an outlet of the foam breaker unit, the inlet of the gas collector being positioned above the outlet of the foam breaker unit, and a liquid collector in fluid communication with an outlet of the foam breaker unit, the inlet of the liquid collector being positioned below the outlet of the foam breaker unit.

In one embodiment according to the foam breaker unit of the disclosure, the vessel further comprises one or more cleaning units arranged to remove solids accumulating inside the foam breaker unit.

In one embodiment according to the foam breaker unit of the disclosure, the vessel comprises two or more segments, each segment comprises shear stress elements for separating the liquid phase and the gas phase, and between each two neighboring segments a cleaning unit is located.

In one embodiment according to the foam breaker unit of the disclosure, the unit further comprises a vertically positioned separator for separating the liquid and the gas phase, the separator comprising:
- a separator inlet in direct fluid communication with an outlet of the vessel;
- a first separator outlet in direct fluid communication with a gas collector; and
- a second separator outlet in direct fluid communication with a liquid collector.

The first separator outlet is situated below the inlet of the gas collector and the second separator outlet is situated above the inlet of the liquid collector.

In one embodiment according to the foam breaker unit of the disclosure, the separator further comprises one or more cleaning units arranged to remove solids accumulating inside the separation unit.

In one aspect of the disclosure, a method for breaking a liquid foam into a liquid phase and a gas phase is disclosed. The method comprises the steps of transferring a liquid foam from a reactor to the foam breaker unit according to the foam breaker unit of the disclosure; breaking the liquid foam into a liquid phase and a gas phase; and collecting the gas phase and the liquid phase.

In one embodiment according to the method of the disclosure, the method further comprises the step of controlling the pressure in the vessel, the liquid collector and the gas collector.

In one embodiment according to the method of the disclosure, the pressure inside the vessel is lower than the pressure inside the reactor.

In one embodiment according to the method of the disclosure, the method further comprises the step of, prior to collecting the gas phase and the liquid phase, treating the gas phase and the liquid phase at the outlet of the vessel in the vertically positioned separator.

In one embodiment according to the method of the disclosure, the method further comprises the step of removing solids in the vessel and/or the separator using the cleaning units arranged in the vessel and/or the separator.

In one embodiment according to the method of the disclosure, the liquid foam is formed by the reaction of a solid reactant with a liquid reactant, inside the reactor.

In one embodiment according to the method of the disclosure, the liquid foam is formed by reaction of phosphate rock with nitric and/or sulphuric acid.

In one embodiment according to the method of the disclosure, the solid reactant is introduced at the bottom section of the reactor.

In one aspect of the disclosure, the use of a foam breaker unit according to the foam breaker unit of the disclosure, for breaking a liquid foam into a liquid phase and a gas phase, is disclosed.

### Detailed description

Throughout the description and claims of this specification, the words "comprise" and variations thereof mean "including but not limited to", and they are not intended to (and do not) exclude other moieties, additives, components, integers or steps. Throughout the description and claims of this disclosure, the singular encompasses the plural unless the context otherwise requires. In particular, where the indefinite article is used, the disclosure is to be understood as contemplating plurality as well as singularity, unless the context requires otherwise.

Features, integers, characteristics, compounds, chemical moieties, or groups described in conjunction with a particular aspect, embodiment or example of the disclosure are to be understood to be applicable to any other aspect, embodiment or example described herein unless incompatible therewith. All of the features disclosed in this disclosure (including the description, claims, abstract and drawing), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this disclosure (including the description, claims, abstract and drawing), or to any novel one, or any novel combination, of the steps of any method or process so disclosed.

The enumeration of numeric values by means of ranges of figures comprises all values and fractions in these ranges, as well as the cited end points. The terms "ranging between ... to ..." or "range from ... to ..." or "up to" as used when referring to a range for a measurable value, such as a parameter, an amount, a time period, and the like, is intended to include the limits associated to the range that is disclosed.

In one aspect of the disclosure, a foam breaker unit for breaking a liquid foam into a liquid phase and a gas phase is disclosed. The foam breaker comprises a vessel comprising shear stress elements for separating the liquid phase and the gas phase of the liquid foam; a vessel inlet for receiving the liquid foam from a reactor; and one or more vessel outlets for removing the liquid phase and the gas phase from the vessel.

The unit is characterized in that the longitudinal axis of the vessel is declined with respect to the horizontal plane at an angle α ranging between - 90.0° and 0.0°, more preferably ranging between - 60.0° to 0.0°. Accordingly, the foam breaker unit is declined at an angle of less than 0.0° and above - 90.0°, more preferably less than 0.0° and above - 60.0°. Accordingly, the angle is preferably less than -1.0°, -1.5°, -2.0°, -2.5°, -3.0°, -3.5°, -4.0°, -4.5° or -5.0° and preferably above -89.0°, -85.0°, -80.0°, - 70.0°, -60.0°, -50.0°, -45.0°, -40.0°, -35.0°, -30.0°, -25.0° or -20.0 °.

As defined herein, the angle α is the angle between the horizontal plane (H) and the longitudinal axis (L) of the vessel of the foam breaker unit. As used herein the term "horizontal plane" refers to the reference plane parallel to the horizon, the term "longitudinal axis of the vessel" refers to the axis along the lengthwise direction of the vessel.

As defined herein, shear stress elements are any element which, due to their geometry and surface, are suitable for causing shear stress onto the liquid foam flowing through the foam breaking unit, resulting in the breaking of the liquid foam. Shear stress elements are for example made of ceramics, plastics or steel. Examples of shear stress elements with a suitable geometry and surface are trays comprising random or structured packing.

As defined herein, a collector is any container, recipient or receptable for either storing a liquid or a gas, or for treating the liquid or the gas before it is further processed in a chemical process or delivered as a final product.

In the present disclosure, foam forms in the reactor though the dissolution of the solid in the liquid. This dissolution results in the formation of foam and in the presence of foam in the top section of the container. The foam comprises liquid, the liquid being the liquid as introduced in the container or the liquid with dissolved solid, said other otherwise the liquid after reaction with the solid. The foam can also comprise undissolved solid depending upon where the solid is introduced in the container. When the foam does not comprise undissolved solid, it is referred to as primary foam. When the foam does comprise undissolved solid, it is referred to as secondary foam.

The inventors have found that by positioning the vessel of the foam breaker unit declined with respect to the horizontal plane at an angle ranging from 0° to above - 90°, more preferably ranging between - 60.0° to 0.0°, the separated gas phase and liquid phase are allowed to flow through the vessel of the foam breaker unit at different velocities, which induces a vortex and which reduces the back-formation of liquid foam through mixing of gas in the gas phase and liquid in the liquid phase. This means that the presence of primary foam is favoured over the presence of secondary foam in the foam breaker unit. Further, more residence time is allowed for the separation of the liquid phase and the gas phase of the foam, as well as for the solid in the secondary foam to dissolve in the liquid in the primary foam, thereby resulting in the conversion of the secondary foam in a liquid phase. As primary foam is easier to separate than secondary foam, the system of the disclosure provides a solution for breaking the foam.

The combination of the nature of the foam and an increased residence time result in improved foam separation in the vessel of the foam breaking unit. Hence, the system of the disclosure provides improved breaking of a foam comprising a liquid and a gas and, hence, increased flexibility in the handling of raw materials.

The solution for foam handling of the disclosure further presents the advantages that the foam breaker unit can very easily be incorporated into existing systems with a conventional foam breaker unit, that is a vertically positioned, conventional liquid-gas separator. The production does not have to be disrupted and the foam breaker unit can be incorporated while the production using the system with the conventional foam breaker unit is under use. Once the foam breaker unit of the present disclosure is installed, it can be connected, through opening of the relevant connections, to the reactor in which the foam is generated, to the liquid collector, and to the gas collector. The production then proceeds with the foam breaker unit of the disclosure after it has been installed, without disrupting the production.

Another advantage of the system of the disclosure is that it can be flexibly designed. This means that the dimensions, in particular the length, of the vessel of the foam breaker unit can be tailored according to the nature of the foam. Therefore, the footprint of the system can be adjusted according to the foam, such that the foam that are easier to separate are separated in a system with a foam breaker unit having a lower footprint than for the systems dealing with foams that are more difficult to separate.

In one embodiment according to the foam breaker unit of the disclosure, the unit further comprises a gas collector in fluid communication with an outlet of the foam breaker unit, the inlet of the gas collector being positioned above the outlet of the foam breaker unit, and a liquid collector in fluid communication with an outlet of the foam breaker unit, the inlet of the liquid collector being positioned below the outlet of the foam breaker unit.

Due to the lower density of the gas phase with respect to the gas phase, the above-described positioning of the inlets of the liquid collector and the gas collector, with respect to the outlet of the foam breaker unit, facilitates the separation of the gas phase and the liquid phase, and also the collection of the gas phase and the liquid phase.

In one embodiment according to the foam breaker unit of the disclosure, the vessel further comprises one or more cleaning units arranged to remove solids accumulating inside the foam breaker unit.

As defined herein, a cleaning unit is any device suitable for removing solids accumulated inside a unit from which solids are to be removed. Example of cleaning units are spray nozzles or injection pipes through which a cleaning liquid or a cleaning gas is introduced and which, through a chemical process such as dissolution, or through a physical process such as a gas or liquid flow, remove solids from the inside of the surface of the unit from which solids are to be removed. Other examples of cleaning units are mechanical cleaning devices known to the person skilled in the art and which, through a mechanical process, such as pneumatic pressure shock, remove solids on the inside surface of the unit from which solids are to be removed.

Several solids can be present in the vessel of the foam breaker unit. These are solids introduced inside the vessel of the foam breaker unit or forming inside the foam breaker unit upon the contact of the liquid foam with the shear stress elements.

The presence of cleaning units ensures the control of clogging on the shear stress elements and inside the vessel of the foam breaker unit. Solid deposits on the inside surface of the vessel of the foam breaking unit are removed and the thickness of solids inside the vessel of the foam breaking unit remains controlled, which means that the flow of the foam in the vessel of the foam breaking unit is not stopped and the production proceeds at, at least, the minimum load set for the production. Said otherwise, with the presence of cleaning units, the shear stress elements remain in contact with the incoming foam that can efficiently be broken and can efficiently break the liquid foam.

In one embodiment according to the foam breaker unit of the disclosure, the vessel comprises two or more segments, each segment comprises shear stress elements for separating the liquid phase and the gas phase, and between each two neighboring segments a cleaning unit is located.

The presence of cleaning units between the segments also reduces the accumulation of solids inside the vessel of the foam breaker unit. Solid deposits inside the foam breaker unit are indeed removed and the thickness of solids inside the vessel of the foam breaker unit remains controlled, which means that the flow of the foam in the foam breaking unit is not stopped and the production proceeds at, at least, the minimum load set for the production.

In one embodiment according to the foam breaker unit of the disclosure, the unit further comprises a vertically positioned separator for separating the liquid and the gas phase, the separator comprising a separator inlet in direct fluid communication with an outlet of the vessel; a first separator outlet in direct fluid communication with a gas collector; and a second separator outlet in direct fluid communication with a liquid collector.

The first separator outlet is situated below the inlet of the gas collector and the second separator outlet is situated above the inlet of the liquid collector.

As defined herein, a separator unit is any unit suitable for separating a liquid and a gas. Examples of liquid separators include but are not limited to gravity separators, centrifugal separators, filter vane separators and liquid gas coalescers.

The presence of this separator unit improves the separation of the liquid phase and the gas phase such that the gas is more optimally collected in the gas collector and the liquid is more optimally collected in the liquid collector. Further, due the lower density of the gas phase with respect to the gas phase, the above-described positioning of the inlet of the liquid and gas collector with respect to the outlet of the foam breaker unit facilitates the separation of the gas phase and the liquid phase.

In one embodiment according to the foam breaker unit of the disclosure, the separator further comprises one or more cleaning units arranged to remove solids accumulating inside the separation unit.

Several solids can be present in the separator unit. These are the solids which, as described above, can form present in the vessel of the foam breaker unit and are transferred from the breaker unit to the separator unit, through the transfer of the liquid phase, the gas phase or any remaining liquid foam, from the vessel of the foam breaker unit to the separator unit.

The presence of cleaning units ensures the control of clogging inside the separator unit. Solid deposits on the inside surface of the separator unit are removed and the thickness of solids inside the separator unit remains controlled, which means that the flow inside the separator unit is not stopped and the production proceeds at, at least, the minimum load set for the production. Said otherwise, with the presence of cleaning units, the separation of the liquid phase and the gas phase can efficiently be performed.

In one aspect of the disclosure, a method for breaking a liquid foam into a liquid phase and a gas phase is disclosed. The method comprises the steps of transferring a liquid foam from a reactor to the foam breaker unit according to the foam breaker unit of the disclosure; breaking the liquid foam into a liquid phase and a gas phase; and collecting the gas phase and the liquid phase.

Hence, it is possible to break the foam in the system of the disclosure, by practicing the steps of the method of the disclosure as described in claim 7.

In one embodiment according to the method of the disclosure, the method further comprises the step of controlling the pressure in the vessel, the liquid collector and the gas collector.

The method of the disclosure allows for a controlled operation for breaking the foam. Indeed, with the system of the disclosure, it is possible to control the flow of the foam to the vessel of the foam breaker unit and also the flow of the liquid foam inside the vessel of the foam breaker unit. Therefore, it is possible to ensure that there is an actual flow of the foam to the vessel and also inside the vessel. The control of the pressure in the reactor, in the liquid collector and in the gas collector can be controlled through respectively controlling the flow of a liquid to the reactor and contributing to the generation of the liquid foam inside the reactor, the flow of the separated liquid phase to the liquid collector and the flow of the separated gas phase to the gas collector. Both under-pressure and overpressure conditions, inside the vessel of the foam breaker unit and with respect to inside the reactor can be achieved, which means that the pressure inside the vessel of the foam breaker unit can be respectively lower or higher than the pressure inside the reactor. In order to achieve under-pressure inside the vessel of the foam breaker unit and with respect to inside the reactor, a pumping unit can be inserted for pumping the separated liquid phase to the liquid collector, or a blower or a fan can be placed inside the separated gas phase going to the gas collector. In order to achieve overpressure conditions inside the vessel of the foam breaker unit and with respect to inside the reactor, the liquid foam can for example be transferred through a pumping unit from the reactor to the vessel of the foam breaker unit.

Thus, through controlling the pressure in the reactor, in the liquid collector and in the gas collector, the method of the disclosure allows for the control of the pressure inside the vessel of the foam breaker unit and, thereby, the flow of the liquid foam through the vessel of the foam breaker unit, which in turn allows for the control of the separation of the liquid phase and of the gas phase inside the foam breaker unit.

In one embodiment according to the method of the disclosure, the pressure inside the vessel is lower than the pressure inside the reactor.

Not only is a flow of the liquid foam from the reactor to the vessel of the foam breaker unit allowed under such conditions, also this flow is allowed without any requirement to transfer the liquid foam from the reactor to the vessel of the foam breaker unit, which reduces the power and energy requirements for operating the system of the disclosure and breaking the foam.

In one embodiment according to the method of the disclosure, the method further comprises the step of, prior to collecting the gas phase and the liquid phase, treating the gas phase and the liquid phase at the outlet of the vessel in the vertically positioned separator.

The presence of this treatment step inside the separator unit improves the separation of the liquid phase and the gas phase such that the gas is more optimally collected in the gas collector and the liquid is more optimally collected in the liquid collector. Further, due the lower density of the gas phase with respect to the gas phase, the above-described positioning of the inlet of the liquid and gas collector with respect to the outlet of the foam breaker unit facilitates the separation of the gas phase and the liquid phase.

In one embodiment according to the method of the disclosure, the method further comprises the step of removing solids in the vessel and/or the separator using the cleaning units arranged in the vessel and/or the separator.

The removal of solids inside the vessel ensures control of clogging on the shear stress elements and inside the vessel of the foam breaker unit. Solid deposits on the inside surface of the vessel of the foam breaking unit are removed and the thickness of solids inside the vessel of the foam breaking unit remains controlled, which means that the flow of the foam in the vessel of the foam breaking unit is not stopped and the production proceeds at, at least, the minimum load set for the production. Said otherwise, with this solid removal step inside the vessel, the shear stress elements remain in contact with the incoming foam that can efficiently be broken and can efficiently break the liquid foam.

The removal of solids inside the separator unit ensures the control of clogging inside the separator unit. Solid deposits on the inside surface of the separator unit are removed and the thickness of solids inside the separator unit remains controlled, which means that the flow inside the separator unit is not stopped and the production proceeds at, at least, the minimum load set for the production. Said otherwise, with the presence of this solid removal step inside the separator unit, the separation of the liquid phase and the gas phase can efficiently be performed.

In one embodiment according to the method of the disclosure, the liquid foam is formed by the reaction of a solid reactant with a liquid reactant, inside the reactor.

In one embodiment according to the method of the disclosure, the liquid foam is formed by reaction of phosphate rock with nitric and/or sulphuric acid.

The method of the disclosure can be practiced for producing phosphoric acid from digestion of phosphate rock in nitric acid according to the Odda, nitro-phosphate process, but also in sulphuric according to the wet phosphoric acid production process, or for producing NPK fertilisers from digestion of phosphate rock in a mixture of phosphoric acid and sulphuric acid. With the method of the disclosure, the foaming in the digestion of the phosphate in the acid can be broken and, thereby, controlled, such that the use of anti-foaming agents is reduced or not required. Hence, the present disclosure brings a solution to the challenging handling of the phosphate rock in the production of phosphoric acid and NPK fertilisers, as described in the introduction. With the method of the disclosure, the digestion of phosphate rock in acid can be controlled.

In one embodiment according to the method of the disclosure, the solid reactant is introduced at the bottom section of the reactor.

By introducing the solid reactant at the bottom section of the reactor, where the liquid reactant is also introduced, the solid reactant dissolves more rapidly in the liquid reactant and the solid reactant and the liquid reactant react faster. means that the solid reactant dissolves at a faster rate, more of the solid reactant dissolves and less of the solid reactant remains undissolved. Consequently, the foam forming is more of a primary nature than of a secondary nature: more primary foam than secondary foam forms. As a result, the foam transferred to the foam breaking unit is easier to handle, that is easier to separate.

In one aspect of the disclosure, the use of a foam breaker unit according to the foam breaker unit of the disclosure, for breaking a liquid foam into a liquid phase and a gas phase, is disclosed.

### Example

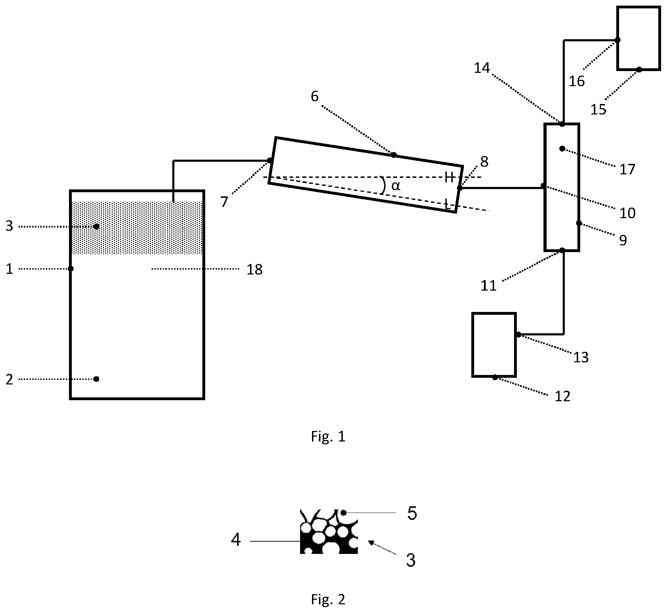

Reference is made to Figures 1 and 2.

Phosphate rock solids having a total organic carbon concentration of above 0.2% by weight were added in a bottom section 2 of a reactor 1, at a rate of 25 t/h. 65% by weight nitric acid in water then was added at a rate of 45 m³/h in the bottom section 2 of the reactor 1, resulting in the partial dissolution of the phosphate rock solids and in the production of a liquid foam 3 having a liquid phase 4 and a gas phase 5, in a top section 18 of the container/reactor 2.

The liquid foam 3 then was transferred from the top section 18 of the reactor 2 to the vessel of a foam breaker unit 6, through an inlet 7 of the foam breaking unit 6 in fluid communication with the top section 18 of the reactor 2.

The vessel of the foam breaker unit 6 was declined with respect to the horizontal plane (H) at an angle α of -18° (with respect to the longitudinal axis of the vessel (L)). The vessel of the foam breaker unit had shear stress elements (not shown) and through the contact of the liquid foam with those shear stress elements, the liquid phase 4 and the gas phase 5 of the liquid foam separated.

The foam breaker unit had an outlet 8 through which the liquid foam, after it had gone through the entire length of the foam breaker unit 6, was collected and transferred in a vertically positioned separator 9 having an inlet 10 in fluid communication with the outlet 8 of the foam breaker unit 8. In the separator unit 9, the liquid phase and the gas phase of the liquid foam were separated.

The liquid phase was collected through an outlet 11 of the separator unit 9 in a liquid collector 12 having an inlet 13 in fluid communication with the outlet 11 of the separator unit 9. The inlet 13 of the liquid collector 12 was located below the outlet 11 of the separator unit 9.

The gas phase was collected through an outlet 14 of the separator unit 9 in a gas collector 15 having an inlet 16 in fluid communication with the outlet 14 of the separator unit 9. The inlet 16 of the gas collector 15 was located above the outlet 14 of the separator unit 9.

The system was operated under under-pressure conditions and the pressure in the vessel of the foam breaker unit 6 was 15 mbar lower than the pressure in the reactor 2, resulting in the liquid foam flowing through the foam breaker unit 6 at a rate of 325 m³/h. The liquid phase was collected in the liquid collector 12 at 10 t/h and the gas phase was collected in the gas collector 15 at 318 m³/h.

The vessel of the foam breaker unit 6 and the separation unit 9 comprised cleaning units (not shown) in the form of nozzles through which 65% by weight nitric acid in water was sprayed, such as to clean solids accumulating inside the vessel foam breaker unit 6 and to the separator unit 9.

The solids accumulating inside the vessel of the foam breaker unit 6 comprised the phosphate rock solids not dissolved in the 65% by weight nitric acid in water and transferred from the reactor 2 to the foam breaker unit 6 along with the liquid foam; additional solids formed from the dissolution of the phosphate rock solids in the 65% by weight nitric acid in water, inside the reactor 2 and transferred from the reactor 2 to the foam breaker unit 6 along with the liquid foam, and/or inside the foam breaker unit 6; and/or solids formed through the contact of the surface of the shear stress elements with the liquid foam.

The solids accumulating inside the separator unit 9 comprised the phosphate rock solids not dissolved in the 65% by weight nitric acid in water and transferred to the separator unit 9 along with the liquid foam 3 and/or the liquid phase 4 of the liquid foam 3 and/or the gas phase 5 of the liquid foam 3; additional solids formed from the dissolution of the phosphate rock solids in the 65% by weight nitric acid in water, inside the reactor 2 and transferred from the reactor 2 to the foam breaker unit 6 along with the liquid foam 3 and/or inside the foam breaker unit 6, and transferred to the separator unit 9 along with the liquid foam 3 and/or the liquid phase 4 of the liquid foam 3 and/or the gas phase 5 of the liquid foam 3; and/or solids formed through the contact of the surface of the shear stress elements with the liquid foam 3 and transferred from the foam breaker unit 6 to the separator unit 9 along with the liquid phase 4 of the liquid foam 3 and/or the gas phase 5 of the liquid foam 3.

The density of the liquid collected in the liquid collector 12 was improved from 0.1 to 1 g/cm³ due to the presence of the foam breaker unit 6, which confirmed an improvement in the foam separation.

## Claims

1. A foam breaker unit for breaking a liquid foam into a liquid phase and a gas phase comprising:
a vessel comprising shear stress elements for separating the liquid phase and the gas phase of the liquid foam;
a vessel inlet for receiving the liquid foam from a reactor; and
one or more vessel outlets for removing the liquid phase and the gas phase from the vessel;
**characterized in that** the longitudinal axis of the vessel is declined with respect to the horizontal plane at an angle α ranging between - 90.0° and 0.0°, more preferably ranging between - 60.0° to 0.0°.

2. The unit according to claim 1, wherein the vessel further comprises a gas collector in fluid communication with an outlet of the foam breaker unit, the inlet of the gas collector being positioned above the outlet of the foam breaker unit; and a liquid collector in fluid communication with an outlet of the foam breaker unit, the inlet of the liquid collector being positioned below the outlet of the foam breaker unit.

3. The unit according to claim 1 or 2, further comprising one or more cleaning units arranged to remove solids accumulating inside the foam breaker unit.

4. The unit according to claim 3, wherein the vessel comprises two or more segments, and wherein each segment comprises shear stress elements for separating the liquid phase and the gas phase, and wherein between each two neighboring segments a cleaning unit is located.

5. The unit according to any one of claims 1 to 4, wherein the unit further comprises a vertically positioned separator for separating the liquid and the gas phase, the separator comprising:
a separator inlet in direct fluid communication with an outlet of the vessel;
a first separator outlet in direct fluid communication with a gas collector; and
a second separator outlet in direct fluid communication with a liquid collector;
wherein the first separator outlet is situated below the inlet of the gas collector and wherein the second separator outlet is situated above the inlet of the liquid collector.

6. The unit according to claim 5, wherein the separator further comprises one or more cleaning units arranged to remove solids accumulating inside the separation unit.

7. A method for breaking a liquid foam into a liquid phase and a gas phase comprising the steps of:
transferring a liquid foam from a reactor to the foam breaker unit according to any of claims 1 to 6;
breaking the liquid foam into a liquid phase and a gas phase; and
collecting the gas phase and the liquid phase.

8. The method according to claim 7, further comprising the step of controlling the pressure in the vessel, the liquid collector and the gas collector.

9. The method according to claim 7 or 8, wherein the pressure inside the vessel is lower than the pressure inside the reactor.

10. The method according to any one of claims 7 to 9, wherein the method further comprises the step of, prior to collecting the gas phase and the liquid phase, treating the gas phase and the liquid phase at the outlet of the vessel in the vertically positioned separator.

11. The method according to any one of claims 7 to 10, further comprising the step of removing solids in the vessel and/or the separator using the cleaning units arranged in the vessel and/or the separator.

12. The method according to any one of claims 7 to 11, wherein the liquid foam is formed by the reaction of a solid reactant with a liquid reactant, inside the reactor.

13. The method according to any one of claims 8 to 12, wherein the liquid foam is formed by reaction of phosphate rock with nitric and/or sulphuric acid.

14. The method according to any one of claims 8 to 13, wherein the solid reactant is introduced at the bottom section of the reactor.

15. Use of a foam breaker unit according to any of claims 1 to 7 for breaking a liquid foam into a liquid phase and a gas phase.
